# EUROPÄISCHE PATENTSCHRIFT

(11) **EP 0 646 218 B1**
(45) Veröffentlichungstag und Bekanntmachung des Hinweises auf die Patenterteilung: **14.08.1996**
(21) Anmeldenummer: 93909785.3
(22) Anmeldetag: 21.05.1993
(51) Int. Cl.: F02M 61/08, F02M 61/04

(54) **KRAFTSTOFF-EINSPRITZDÜSE FÜR BRENNKRAFTMASCHINEN**
FUEL INJECTION NOZZLE FOR INTERNAL COMBUSTION ENGINES
INJECTEUR DE CARBURANT POUR MOTEURS A COMBUSTION INTERNE

(30) Priorität: 10.06.1992 DE 4218980; 26.08.1992 DE 4228360
(43) Veröffentlichungstag der Anmeldung: 05.04.1995
(73) Patentinhaber: ROBERT BOSCH GMBH, 70442 Stuttgart (DE)
(72) Erfinder: POTZ, Detlev, D-70193 Stuttgart (DE); DUETSCH, Theodor, D-96052 Bamberg (DE); LEWENTZ, Guenter, D-71282 Hemmingen (DE); GORDON, Uwe, D-71706 Markgroeningen (DE)
(86) Internationale Anmeldenummer: DE9300446
(87) Internationale Veröffentlichungsnummer: WO9325813

(56) Entgegenhaltungen:
- EP-A- 0 209 244
- WO-A-91/11609
- FR-A- 529 794
- US-A- 2 332 535

## Beschreibung

### Stand der Technik

Die Erfindung bezieht sich auf eine Kraftstoff-Einspritzdüse für Brennkraftmaschinen, insbesondere solche mit Direkteinspritzung, nach dem Oberbegriff des Anspruchs 1. Bei einer aus der EP-A-209 244 bekannten Einspritzdüse dieser Gattung ist der vom Ventilsitz und vom Ventilkegel gebildete kreislinienförmige Dichtsitz am radial äußeren Umfang des Ventilsitzes bzw. des Ventilkegels dadurch gebildet, daß der Kegelwinkel des Ventilsitzes am Düsenkörper kleiner ist als der Kegelwinkel des Ventilkegels am Schließkopf der Ventilnadel. Außerdem ist die Steuerkante am Übergang des Ventilsitzes in den Führungsabschnitt des Düsenkörpers gerundet. Durch diese Gestaltung wird zwischen der Fläche des Ventilsitzes und des Ventilkegels sowie dem Umfang des Führungsteils der Ventilnadel ein im Querschnitt keilförmiger Ringspalt gebildet, in dem sich in Ausrichtung mit dem Öffnungsquerschnitt der Spritzlöcher der Ventilnadel bei geschlossenem Ventil Kraftstoff ansammelt, der insbesondere bei Spritzbeginn die Strahlaufbereitung behindert. Ferner prallen die aus den Spritzöffnungen austretenden Kraftstoffstrahlen teilweise auf die Rundung und die sich nach außen verengenden Flächen des Ventilsitzes und des Ventilkegels, was zu einem Energieverlust für die Kraftstoffaufbereitung führt.

Ferner ist aus der US-PS 2 035 203 eine ähnliche Kraftstoffeinspritzdüse bekannt geworden, bei der die Ventilnadel einen Schaft mit dem Schließkopf und eine den Schaft umgebende Hülse hat, die Längsnuten im Schaft abdeckt und in ihrer dem Ventil zugewandten Stirnseite Schlitze hat, die Spritzöffnungen mit einem bestimmten Querschnitt bilden. Bei dieser bekannten Einspritzdüse wird zwar eine gute Strahlaufbereitung erzielt, die Dichtigkeit ihres Ventils läßt jedoch durch den Flächensitz zwischen Ventilkegel und Ventilsitz zu wünschen übrig. Dieser Nachteil wird noch dadurch verstärkt, daß die Ventilnadel mit dem Ventilkegel mit der aufgesetzten Hülse im Düsenkörper geführt wird, so daß durch einen Versatz derer Achsen die Dichtsitzpassung verschoben wird.

### Vorteile der Erfindung

Die erfindungsgemäße Einspritzdüse mit den kennzeichnenden Merkmalen des Anspruchs 1 hat den Vorteil, daß die Einspritzstrahlen mit sehr geringem Energieverlust aufbereitet werden, und daß durch die scharfe Steuerkante am Düsenkörper der Zeitpunkt der Düsenquerschnittseröffnung bei Beginn des Nadelhubs eindeutig definiert ist. Ferner wird durch den sich an die Steuerkante radial unmittelbar anschließenden Dichtsitzdurchmesser erreicht, daß der Durchmesser des Dichtsitzes nahezu identisch ist mit dem hydraulisch wirksamen Durchmesser des Kolbenschiebers der Ventilnadel im Düsenkörper. Dadurch gelingt es, den Geqendruckeinfluß zu minimieren. Da der brennraumseitige Gegendruck auf die gesamte sich aus dem Dichtsitzdurchmesser ergebende Fläche wirkt, die hydraulische Öffnungskraft aber nur auf die Ringfläche zwischen der oberen Nadelführung und dem Durchmesser des Führungsteils bzw. des Kolbenschiebers der Ventilnadel ist es für ein einwandfreies Öffnen der Ventilnadel auch unter höchstem Brennraumdruck noch vorteilhaft, daß der hydraulisch wirksame Schieberdurchmesser möglichst groß ist, d.h. möglichst nahe an dem Ventilsitzdurchmesser liegt.

Durch die in den Unteransprüchen aufgeführten Maßnahmen sind vorteilhafte Weiterbildungen und Verbesserungen der im Anspruch 1 angegebenen Kraftstoff-Einspritzdüse möglich. Durch die Gestaltung der Ventilnadel der Einspritzdüse nach Anspruch 2 ist ein Ventil darstellbar, bei dem es in konstruktiv einfacher Weise möglich ist, den linienförmigen Dichtsitz in unmittelbarer Nähe der Steuerkante des Ventilkörpers anzuordnen.

### Zeichnung

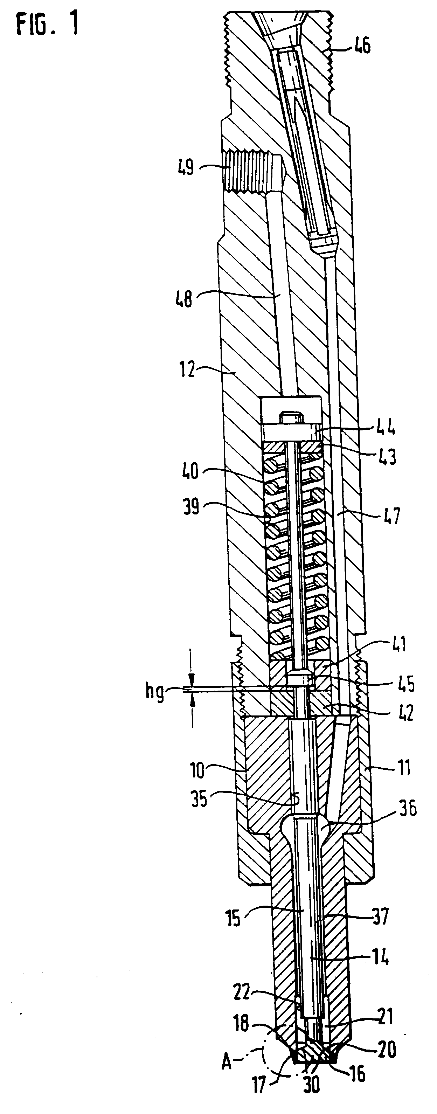

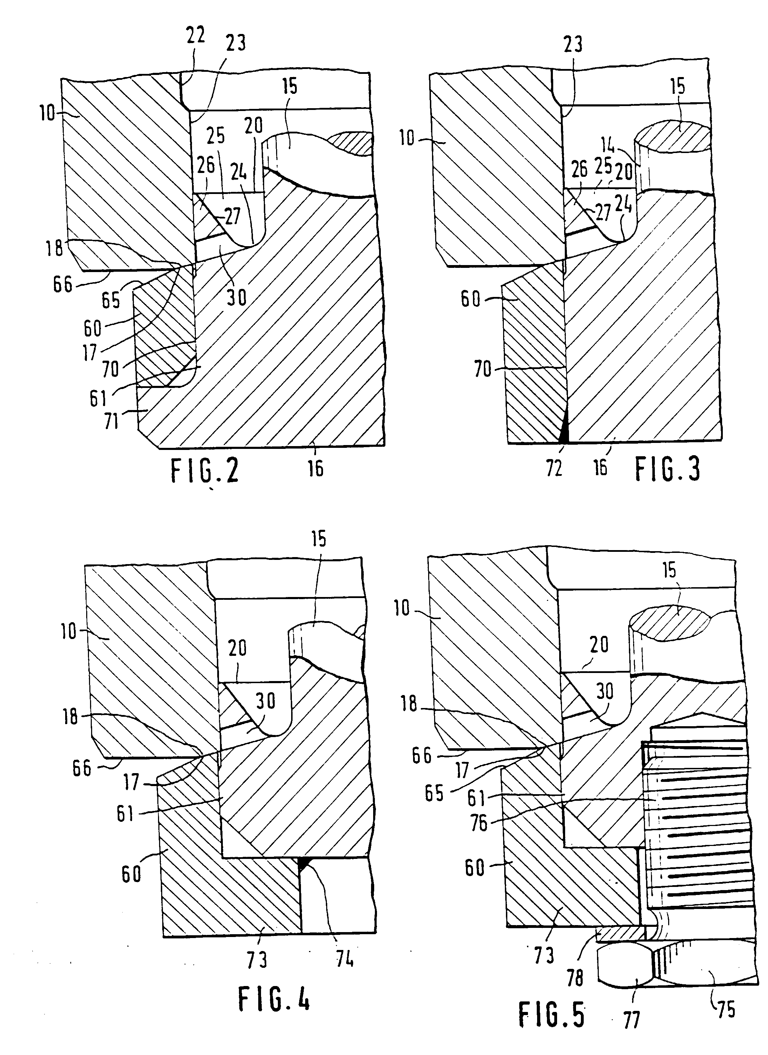

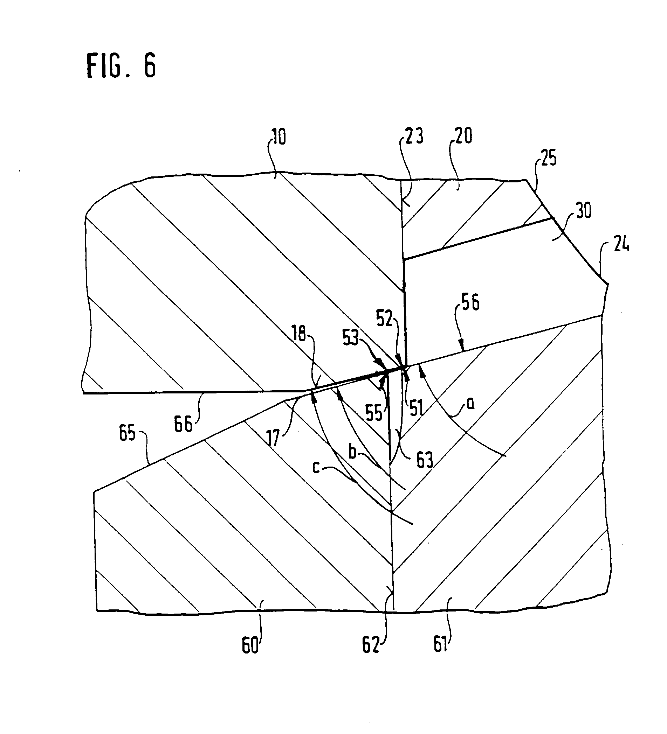

Ausführungsbeispiele der Erfindung sind in der Zeichnung dargestellt und werden im folgenden näher beschrieben. Es zeigen Figur 1 eine Kraftstoff-Einspritzdüse im Längsschnitt, Figur 2 bis 5 verschiedene Ausführungsbeispiele des brennraumseitigen Endes der Einspritzdüse nach Figur 1 im Schnitt im vergrößerten Maßstab und Figur 6 einen Ausschnitt A aus dem Ventilbereich der Einspritzdüse nach Figur 1 in stark vergrößertem Maßstab.

### Beschreibung der Ausführungsbeispiele

Die Einspritzdüse hat einen Düsenkörper 10, der mittels einer Überwurfmutter 11 an einem Düsenhalter 12 festgespannt ist. Im Düsenkörper 10 ist eine Ventilnadel 15 verschiebbar gelagert, die am brennraumseitigen Ende einen Schließkopf 16 trägt. Dieser hat einen kegelstumpfförmigen Ventilkegel 17, der mit einem hohlkegelstumpfförmigen Ventilsitz 18 am Düsenkörper 10 zusammenwirkt. Radial abgesetzt zum Ventilkegel 17 hat der Schließkopf 16 einen Kolbenschieber 20, der in einem dem Ventilsitz 18 nahen Führungsabschnitt 23 einer Zylinderbohrung 22 im Düsenkörper 10 geführt ist, die einen Druckraum 21 bildet.

Auf seiner dem Druckraum 21 zugewandten Stirnseite hat der Kolbenschieber 20 eine den Schaft 14 der Ventilnadel 15 umgebende ringförmige, als Freistich ausgebildete Ausnehmung 25, die radial außen von einem Mantel 26 des Kolbenschiebers 20 begrenzt ist. Die äußere vom Mantel 26 begrenzte Wandfläche der Ausnehmung 25 ist kegelig, so daß sich die Ausnehmung 25 zum Druckraum 21 hin weit öffnet. Im Mantel 26 des Kolbenbenschiebers 20 sitzen mehrere auf dem Umfang verteilte Spritzlöcher 30, die die Spritzquerschnitte bestimmen. Anstelle der Löcher können auch Schlitze angeordnet sein. Die Spritzlöcher 30 können einen zylindrischen Querschnitt haben, vorzugsweise haben sie jedoch einen zur Mittelachse der Ventilnadel 15 parallel langgestreckten Querschnitt, beispielsweise den eines flachen Ovals oder eines Rechtecks. Je nach dem gewünschten Verlauf des Öffnungsquerschnitts kann jeder in sich geschlossene Kurvenzug verwirklicht sein. In dem dem Ventilkegel 17 nahen Grund kann der Querschnitt enger gestaltet sein als darüber. Sind die Durchbrüche als Schlitze oder Nuten ausgebildet, können diese zur Bildung einer bestimmten Querschnitt-Charakteristik der Spritzstrahlen in Abhängigkeit vom Hub der Ventilnadel 15 einen rechteckigen, dreieckigen, gestuften oder einem anderen der Einspritzcharakterisk angepaßten Querschnitt haben.

Die Ventilnadel 15 ist in einer Führungsbohrung 35 im Düsenkörper 10 verschiebbar gelagert, an die sich stromabwärts eine Sammelkammer 36 und ein diese mit dem Druckraum 21 verbindender Ringspalt 37 anschließen. Die Ventilnadel 15 wird mit ihrem Schließkopf 16 gegen den Ventilsitz 18 am Düsenkörper 10 von einer Schließfeder 40 gezogen, die in einer Federkammer 39 im Düsenhalter 12 angeordnet ist. Die Schließfeder 40 stützt sich über eine Distanzbuchse 41 und eine geschlitzte Anschlagscheibe 42 am Düsenkörper 10 ab und drückt über eine Ausgleichscheibe 43 gegen einen am Ende der Ventilnadel 15 befestigten Stützring 44. Zum Begrenzen des Gesamthubes h g der Ventilnadel 15 ist der Schaft der Ventilnadel 15 in Höhe der Anschlagscheibe 42 einen Anschlagbund 45 bildend abgesetzt, der in Schließstellung der Ventilnadel 15 von der Anschlagscheibe 42 den Abstand h hat. Zu der Sammelkammer 36 im Düsenkörper 10 führt ein von einem Anschlußstutzen 46 ausgehender Zulaufkanal 47 im Düsenhalter 12 und im Düsenkörper 10. Ferner verbindet ein Leckölkanal 48 die Federkammer 39 mit einem Anschluß 49.

Um die Ausrichtung der Spritzlöcher 30 im Kolbenschieber 20 dem Brennraum anzupassen, sind diese zur Längsachse der Ventilnadel 15 geneigt, beispielsweise in einem Kegelwinkel a von 150° angeordnet. Sie gehen vom Grund 24 der Ausnehmung 25 im Kolbenschieber 20 aus und münden mit ihrem Öffnungsquerschnitt im Umfang des Außenmantels des Kolbenschiebers 20, der im Führungsabschnitt 23 der Zylinderbohrung 22 geführt ist. Die den Öffnungsquerschnitt jeder der Spritzbohrungen 30 begrenzende Kante ist scharf ausgebildet, insbesondere der dem Ventilkegel 17 unmittelbar benachbarte Teil, der eine Steuerkante 51 für den Spritzbeginn bildet (Figur 6). Um die Ausbildung der Steuerkante 51 am Kolbenschieber 20 als scharfe Kante zu ermöglichen, erstreckt sich die zylindrische Umfangsfläche des Kolbenschiebers 20 axial über die Steuerkante 51 hinaus. In Schließstellung (Figur 6) der Ventilnadel 15 grenzt diese Steuerkante 51 am Kolbenschieber 20 an einer ringförmigen Steuerkante 52 am Düsenkörper 10 an, die den Übergang der Zylinderfläche des Führungsabschnitts 23 zur kegeligen Fläche des Ventilsitzes 18 bildet und die ebenfalls scharf ausgebildet ist, so daß ein Abdichten der Spritzlöcher 30 bei in gleicher Höhe liegenden Steuerkanten 51 und 52 des Düsenkörpers und der Ventilnadel 15 ohne überdeckung möglich ist.

Die von den Steuerkanten 51 und 52 gebildete Abdichtung dient zum definierten Eröffnen des Spritzbeginns. Die eigentliche Abdichtung wird vom Ventilsitz 18 am Düsenkörper 10 und vom Ventilkegel 17 an der Düsennadel 15 gebildet, und zwar in Form einer ringförmigen Dichtsitzlinie 53. Um den Gegendruckeinfluß weiter zu verringern, wäre es ideal, wenn der Durchmesser der Dichtsitzlinie 53 gleich dem des Kolbenschiebers 20 wäre. Eine solche Ausgestaltung würde jedoch im Laufe des Betriebes durch das ständige Aufschlagen zu einer Verformung der Steuerkanten 51 und 52 an der Ventilnadel 15 und am Düsenkörper 10 führen. Aus diesem Grund ist der Durchmesser der Dichtsitzlinie 53 geringfügig, beispielsweise gleich oder kleiner als 0,01 mm größer als der Durchmesser der Steuerkante 52 am Düsenkörper 10.

Gebildet wird die Dichtsitzlinie 53 durch die Anlage einer scharfen Ringkante 55 an der radial inneren Begrenzung des kegelstumpfförmigen Ventilkegels 17 der Ventilnadel 15. Damit zeitgleich mit dem Hubbeginn der Ventilnadel 15 ohne Leerhub auch der Spritzquerschnitt der Spritzlöcher 30 durch die beiden Steuerkanten 51 und 52 aufgesteuert wird, liegt die Dichtsitzlinie 53 auf der Verlängerung der die Steuerkante 51 schneidenden Mantellinie 56 der Spritzlöcher 30. Ferner ist der Kegelwinkel b des Ventilkegels 17 und der Kegelwinkel c des Ventilsitzes 18 in dem Erstreckungswinkel a der Spritzlöcher 30 bzw. deren die Steuerkante 51 schneidenden Mantellinie 56 angepaßt, jedoch der Kegelwinkel b des Vetilkegels 17 um wenige Grade, beispielsweise 3°, kleiner und der Kegelwinkel c des Ventilsitzes 18 um wenige Grade, beispielsweise 3°, größer ausgebildet als der Kegelwinkel a, in dem sich die Spritzlöcher 30 bzw. deren die Steuerkante 51 schneidenden Mantellinien 56 erstrecken.

Die o.a. Ventilsitzgestaltung wird durch eine zweiteilige Ausbildung der Ventilnadel 15 realisiert, bei der der Kolbenschieber 20 mit den Spritzlöchern 30 einstückig mit dem Schaft 14 der Ventilnadel 15 ist und der Ventilkegel 17 an einem Ringkörper 60 angeordnet ist, der auf einem Fortsatz 61 des Kolbenschiebers 20 am brennraumseitigen Ende der Ventilnadel 15 befestigt ist.

Auf der dem Ventilsitz 18 zugewandten Stirnseite des Ringkörpers 60 ist der Ventilkegel 17 gebildet, dessen innere Ringkante 55 durch die Mantelfläche der Innenbohrung 62 begrenzt wird. Um den oben erwähnten Abstand der durch die Ringkante 55 gebildeten Dichtsitzlinie 53 an der Steuerkante 52 am Düsenkörper 10 zu bilden, ist der Durchmesser der Innenbohrung 62 des Ringkörpers 60 um das oben ausgeführte Maß größer als der Durchmesser des Kolbenschiebers 20. Dementsprechend ist auch der Durchmesser des Fortsatzes 61 des Kolbenschiebers 20 größer. Um die Steuerkante 51 scharf auszubilden, ragt der Ringkörper 60 über den Fortsatz 62, so daß in diesem Bereich ein Spalt 63 gebildet ist, der strömungstechnisch unbedeutsam ist, da er nicht mit dem Spritzquerschnitt des aus dem Spritzloch 30 austretenden Strahles fluchtet. Der kegelstumpfförmige Ventilkegel 17 und der hohlkegelstumpfförmige Ventilsitz 18 sind sehr schmal ausgebildet, weniger als 1 mm breit; die sich daran radial nach außen anschließenden Flächen 65, 66 sind stark abgeneigt, um die Spritzstrahlen nicht zu beeinflussen.

Der Ringkörper 60 kann auf der Ventilnadel 15 auf verschiedene Arten befestigt sein. Er wird auf den Fortsatz 61 der Ventilnadel 15 aufgeschoben und dort form- und/oder kraftschlüssig gehalten. Bei dem Ausführungsbeispiel in der Figur 2 wird der Ringkörper 60 mittels eines Preßsitzes 70 gehalten und durch einen Bund 71 am Ende der Ventilnadel 15 gesichert. Ebenfalls mit einem Preßsitz 70 sitzt der Ringkörper 60 beim Ausführungsbeispiel nach Figur 3 auf dem Fortsatz 61 und wird durch eine Schweißnaht 72 am brennraumseitigen Ende gesichert.

Bei den Ausführungsbeipielen nach den Figuren 4 und 5 hat der Ringkörper 60 einen Innenbund 73, der das brennraumseitige Stirnende der Ventilnadel 17 übergreift. Eine Schweißnaht 74 an der Innenseite des Bundes 73 verbindet den Ringkörper 60 mit der Stirnseite der Ventilnadel 15 (Figur 4). Die Befestigung des Ringkörpers 60 kann auch mit einer Kopfschraube 75 durchgeführt werden, deren Schaft 76 in eine Gewindebohrung im Fortsatz 61 greift und deren Kopf 77 den Bund 73 des Ringkörpers 60 unter Zwischenlage einer Scheibe 78 übergreift. Grundsätzlich ist als Verbindungstechnik beispielsweise das Laser-schweißen, Elektronenstrahlschweißen, Pressen und Schrumpfen zum Befestigen des Ringkörpers 60 auf der Ventilnadel 15 möglich.

### Die beschriebene Einspritzdüse arbeitet wie folgt:

In den Einspritzpausen drückt die Schließfeder 40 die Ventilnadel 15 mit dem Ventilkegel 17 der Ventilnadel 15 gegen den Ventilsitz 18 am Düsenkörper 10, wobei die Mündung der Spritzlöcher 30 von der im Führungsabschnitt 23 umgebenden Wand des Düsenkörpers 10 überdeckt sind und der Dichtkegel 17 am Ventilsitz 18 dicht anliegt. Beim Zuführen von Kraftstoff unter Druck durch den Zulaufkanal 47 in die Sammelkammer 36 und von dort durch den Ringspalt 37 in den Druckraum 21 baut sich in diesem ein Druck auf, der auf den Kolbenschieber 20 des Schließkopfes 16 wirkt. Bei Erreichen eines bestimmten Öffnungsdruckes, bei dem die Vorspannung der Schließfeder 40 überwunden wird, wird die Ventilnadel 15 in Strömungsrichtung verschoben. Dabei hebt der Ventilkegel 17 mit der Ringkante 55 vom Ventilsitz 18 am Düsenkörper 10 ab und die Steuerkante 51 der Spritzlöcher 30 entfernt sich von der Steuerkante 52 am Düsenkörper 10, wobei in Abhängigkeit vom Förderdruck des Kraftstoffes gesteuert, ein definierter Spritzquerschnitt der Spritzlöcher 33 freigegeben wird. Nadelhub und Spritzquerschnitt ergeben sich jeweils aus dem Gleichgewicht der Kraft der Schließfeder 40 und der hydraulischen Kraft am Kolben 20. Durch den freigegebenen Spritzquerschnitt an der Mündung der Spritzlöcher 30 strömt Kraftstoff in Form von gebündelten Spritzstrahlen zwischen dem Ventilkegel 17 und dem Ventilsitz 18 in den Brennraum der Brennkraftmaschine in einem bestimmten Kegelwinkel wie bei konventionellen Mehrlochdüsen. Durch die Form des Querschnitts der Spritzlöcher 30 als Rechteck, Dreieck, Oval oder anderen in sich geschlossenen Kurvenzügen werden der Einspritzdüse verschiedene Querschnittsöffnungsverläufe aufgeprägt. Auf diese Weise läßt sich vorzugsweise in Verbindung mit der Charakteristik der Schließfeder 40 und der Pumprate der Einspritzpumpe der zeitweilige Einspritzverlauf für eine optimale motorische Verbrennung beeinflussen. Durch die vorgenannte Gleichgewichtsbedingung wird stets der gerade für die Kraftstoffaufbereitung optimale Spritzquerschnitt eingestellt. Dieser Spritzquerschnitt ist stets die engste Stelle im hydraulischen System, so daß keine Sitzdrosselung auftreten kann.

Beim Abbau des Druckes des geförderten Kraftstoffes zieht die Schließfeder 40 die Ventilnadel 15 wieder zurück, wobei zunächst die Spritzlöcher 30 zugesteuert werden und dann der Ventilkegel 17 des Schließkopfes 16 am Ventilsitz 18 des Düsenkörpers 10 wieder dicht abschließt.

## Patentansprüche

1. Kraftstoff-Einspritzdüse für Brennkraftmaschinen, insbesondere für solche mit Direkteinspritzung, mit einem Düsenkörper (10), in dem eine axiale Durchgangsbohrung mit einem Führungsteil (23) und am brennraumseitigen Ende ein kegelstumpfförmiger Ventilsitz (18) gebildet sind, wobei die Ringkante zwischen dem Führungsteil (23) der Durchgangsbohrung und dem Ventilsitz (18) eine Steuerkante (52) bildet, mit einer mit einem kolbenschieberartigen Führungsabschnitt (20) in dem Führungsteil (23) des Düsenkörpers (10) verschiebbaren, nach außen öffnenden federbelasteten Ventilnadel (15), die an ihrem den Ventilsitz (18) überragenden Ende einen Schließkopf (16) mit einem Ventilkegel (17) hat, dessen Sitzfläche in axialer Deckung mit dem Ventilsitz (18) ist, wobei der Kegelwinkel (16) der Sitzfläche des Ventilkegels (17) von dem (c) des Ventilsitzes (18) geringfügig abweicht, so daß eine ringförmige Dichtsitzlinie (53) gebildet wird, und welcher kolbenschieberartige Führungsabschnitt (20) der Ventilnadel (15) vom Führungsteil (23) des Düsenkörpers (10) überdeckt wird und nadelhubabhängig von dessen Steuerkante (52) beim Öffnungshub aufsteuerbare Spritzöffnungen (30) hat, zu deren Erstreckung die Neigung des Ventilkegels (17) ausgerichtet ist, dadurch gekennzeichnet, daß die Steuerkante (52) am Übergang des Ventilsitzes (18) zum zylindrischen Führungsteil (23) des Düsenkörpers (10) scharfkantig ausgebildet ist, daß der Kegelwinkel (c) des Ventilsitzes (18) am Düsenkörper (10) geringfügig größer ist als der Kegelwinkel (b) des Ventikegels (17) an der Ventilnadel (15), und daß die radial innere Begrenzung der Ventilfläche des Ventilkegels (17) als scharfe Ringkante (55) ausgebildet ist, deren Durchmesser geringfügig größer ist als der Durchmesser der Steuerkante (51) am Düsenkörper (10), so daß die ringfömige Dichtsitzlinie (53) unmittelbar neben der Steuerkante (51) gebildet wird.

2. Kraftstoff-Einspritzdüse nach Anspruch 1, dadurch gekennzeichnet, daß der Ventilkegel (17) an einem Ringkörper (60) gebildet ist, der am Schließkopf (16) der Ventilnadel (15) befestigt ist.

3. Kraftstoff-Einspritzdüse nach Anspruch 2, dadurch gekennzeichnet, daß der Ringkörper (60) auf einem zylindrischen Fortsatz (62) des Führungsabschnitts (20) der Ventilnadel (15) aufgesetzt ist, dessen Durchmesser geringfügig größer ist als der Durchmessser des Führungsabschnitts (20) der Ventilnadel (15).

4. Kraftstoff-Einspritzzdüse nach Anspruch 3, dadurch gekennzeichnet, daß der Ringkörper (60) auf der Düsennadel (15) durch Kraft-schluß befestigt ist.

5. Kraftstoff-Einspritzdüse nach Anspruch 3, dadurch gekennzeichnet, daß der Ringkörper (60) durch Formschluß auf der Düsennadel (15) befestigt ist.

6. Kraftstoff-Einspritzdüse nach einem der Ansprüche 1 bis 5, dadurch gekennzeichnet, daß der Kegelwinkel (c) des Ventilsitzes (18) am Düsenkörper (10) um 2° bis 10° größer ist als der Kegelwinkel (b) des Ventilkegels (17) an der Düsennadel (15).

## Claims

1. Fuel injection nozzle for internal combustion engines, especially for those with direct injection, having a nozzle body (10), in which an axial through hole with a guiding part (23) and, at the combustion-chamber end, a frustoconical valve seat (18) are formed, the annular edge between the guiding part (23) of the through hole and the valve seat (18) forming a control edge (52), having an outwardly opening, spring-loaded valve needle (15) which can be displaced with a guiding section (20) similar to a piston-type slide valve in the guiding part (23) of the nozzle body (10) and, at its end projecting beyond the valve seat (18), has a closing head (16) with a valve cone (17), the seating surface of which is axially congruent with the valve seat (18), the angle of taper (16) of the seating surface of the valve cone (17) differing slightly from that (c) of the valve seat (18), with the result that an annular sealing-seat line (53) is formed, and which guiding section (20), similar to a piston-type slide valve, of the valve needle (15) being covered by the guiding part (23) of the nozzle body (10) and having spray openings (30) which can be opened during the opening stroke by the control edge (52) of the same nozzle body as a function of the needle stroke and with the extension of which the slope of the valve cone (17) is aligned, characterized in that the control edge (52) takes the form of a sharp edge at the transition of the valve seat (18) to the cylindrical guiding section (23) of the nozzle body (10), in that the angle of taper (c) of the valve seat (18) on the nozzle body (10) is slightly greater than the angle of taper (b) of the valve cone (17) on the valve needle (15) and in that the radially inner boundary of the valve surface of the valve cone (17) is designed as a sharp annular edge (55), the diameter of which is slightly greater than the diameter of the control edge (51) on the nozzle body (10), with the result that the annular sealing-seat line (53) is formed immediately adjacent to the control edge (51).

2. Fuel injection nozzle according to Claim 1, characterized in that the valve cone (17) is formed on an annular body (60) which is fixed on the closing head (16) of the valve needle (15).

3. Fuel injection nozzle according to Claim 2, characterized in that the annular body (60) is mounted on a cylindrical extension (62) of the guiding section (20) of the valve needle (15), the diameter of which is slightly greater than the diameter of the guiding section (20) of the valve needle (15).

4. Fuel injection nozzle according to Claim 3, characterized in that the annular body (60) is fixed on the nozzle needle (15) by nonpositive engagement.

5. Fuel injection nozzle according to Claim 3, characterized in that the annular body (60) is fixed on the nozzle needle (15) by positive engagement.

6. Fuel injection nozzle according to one of Claims 1 to 5, characterized in that the angle of taper (c) of the valve seat (18) on the nozzle body (10) is 2° to 10° greater than the angle of taper (b) of the valve cone (17) on the nozzle needle (15).

## Revendications

1. Injecteur de carburant pour moteurs à combustion interne, notamment pour l'injection directe comprenant un corps d'injecteur (10) avec un perçage traversant axial comprenant une partie de guidage (23) et à l'extrémité située du côté de la chambre de combustion, un siège de clapet 18 en forme de tronc de cône, l'arête annulaire entre la partie de guidage (23) du perçage traversant et le siège de clapet (18) formant une arête de commande (52) un segment de guidage (20) en forme de tiroir à pistons dans la partie de guidage (23) du corps (10), coulissante, avec une aiguille (15) chargée par ressort dans le sens de l'ouverture, ayant à son extrémité dépassant le siège de clapet (18), une tête d'obturation (16) avec un cône de clapet (17) dont la surface formant siège correspond axialement avec le siège de clapet (18), l'angle au sommet (16) de la surface d'appui du cône de clapet (17) étant légèrement différent de l'angle (c) du siège de clapet (18) pour former une ligne de siège d'étanchéité (53) annulaire et le segment de guidage (20) en forme de coulisseau à piston de l'aiguille (15) est chevauché par la partie de guidage (23) du corps (10) et comporte des orifices d'injection (30) commandés dans le sens de l'ouverture par son arête de commande (52) par les orifices d'injection (30) commandés par la course d'ouverture, l'inclinaison du cône de clapet (17) étant alignée par rapport au prolongement des orifices d'injection, caractérisé en ce que l'arête de commande (52) au passage entre le siège de clapet (18) et la partie de guidage cylindrique (23) du corps d'éjecteur (10) se présente sous la forme d'une arête vive, l'angle au sommet (c) du siège de clapet (18) du corps d'injecteur (10) étant légèrement supérieur à l'angle au sommet (b) du cône de clapet (18) de l'aiguille d'injecteur (15) et la limite radiale intérieure de la surface de clapet du cône de clapet (17) étant en forme d'arête annulaire vive (55) dont le diamètre est légèrement supérieur au diamètre de l'arête de commande (51) du corps d'injecteur (10) pour que la ligne de siège d'étanchéité (53) annulaire soit formée directement à côté de l'arête de commande (51).

2. Injecteur selon la revendication 1, caractérisé en ce que le cône de clapet (17) est formé sur un corps annulaire (60) fixé à la tête d'obturation (16) de l'aiguille d'injecteur (15).

3. Injecteur selon la revendication 2, caractérisé en ce que le corps annulaire (60) est rapporté sur le prolongement cylindrique (62) du segment de guidage (20) de l'aiguille d'injecteur (15) dont le diamètre est légèrement inférieur au diamètre du segment de guidage (20) de l'aiguille d'injecteur (15).

4. Injecteur selon la revendication 3, caractérisé en ce que le corps annulaire (60) est fixé par une liaison par la force sur l'aiguille d'injecteur (15).

5. Injecteur selon la revendication 3, caractérisé en ce que le corps annulaire (60) est fixé à l'aiguille d'injecteur (15) par une liaison par la forme.

6. Injecteur selon l'une des revendications 1 à 5, caractérisé en ce que l'angle au sommet (c) du siège de clapet (18) du corps (10) est supérieur de 2° à 10° à l'angle au sommet (b) du cône d'injecteur (17) de l'aiguille d'injecteur (15).
